# EUROPÄISCHE PATENTSCHRIFT

(11) **EP 2 826 982 B1**
(45) Veröffentlichungstag und Bekanntmachung des Hinweises auf die Patenterteilung: **26.02.2025**
(21) Anmeldenummer: 14002402.7
(22) Anmeldetag: 12.07.2014
(51) Int. Cl.: F02D 41/30, F02D 41/32, F02D 41/34, F02B 75/02, F02M 37/00

(54) **Verfahren zum Betrieb eines Verbrennungsmotors**
Method for operating a combustion engine
Procédé destiné au fonctionnement d'un moteur à combustion interne

(30) Priorität: 19.07.2013 DE 102013012135
(43) Veröffentlichungstag der Anmeldung: 21.01.2015
(73) Patentinhaber: Andreas Stihl AG & Co. KG, 71336 Waiblingen (DE)
(72) Erfinder: Eberle, Christian, 71404 Korb (DE); Weinig, Markus, 71364 Winnenden (DE); Naegele, Claus, 70563 Stuttgart (DE); Reichler, Mark, 73630 Remshalden (DE)
(74) Vertreter: Reinhardt, Annette

(56) Entgegenhaltungen:
- AT-B- 408 250
- DE-A1- 2 802 634
- GB-A- 2 462 657
- US-A- 4 979 480

## Beschreibung

Die Erfindung betrifft ein Verfahren zum Betrieb eines Verbrennungsmotors der im Oberbegriff des Anspruchs 1 angegebenen Gattung.

Aus der DE 23 48 638 C3 ist ein Vergaser für eine Brennkraftmaschine bekannt, der ein elektromagnetisch betätigtes Ventil besitzt. Das Ventil wird im Takt mit den Zylinderansaugphasen geöffnet. Zur Anpassung der zugeführten Kraftstoffmenge werden die Öffnungszeiten abhängig von Betriebsparametern der Brennkraftmaschine verändert.

Es ist bekannt, den Ansaugkanal bei gemischgeschmierten Verbrennungsmotoren, insbesondere bei Zweitaktmotoren oder gemischgeschmierten Viertaktmotoren, über ein vom Kolbenhemd eines Kolbens des Verbrennungsmotors gesteuertes Ventil mit dem Kurbelgehäuse des Verbrennungsmotors zu verbinden. Wird der Kraftstoff über das Kraftstoffventil jeweils synchron zum Ansaugtakt zugeführt, ergeben sich insbesondere bei hohen Drehzahlen sehr kurze Schaltzeiten des Ventils. Dadurch wird ein Ventil benötigt, das sehr schnell reagiert. Aufgrund der insbesondere bei hohen Drehzahlen sehr häufigen Schaltvorgänge ist die Lebensdauer des Ventils verkürzt.

**Aus der** GB 2 462 657 A **ist ein Verfahren zur Kraftstoffeinspritzung eines Verbrennungsmotors bekannt, bei dem Kraftstoff und Öl in den Ansaugkanal zugeführt werden. Der Ansaugkanal mündet über ein Rückschlagventil in den Kurbelgehäuseinnenraum. Kraftstoff und Öl werden über Einspritzventile zugeführt, wobei die zugeführte Menge von Kraftstoff und Öl über die Anzahl der Öffnungszyklen der Ventile bestimmt wird. Aus dieser Druckschrift geht auch ein Verbrennungsmotor hervor, bei dem der Ansaugkanal über ein Ventil in den Brennraum mündet und Kraftstoff über ein Kraftstoffventil in den Ansaugkanal mündet. Die Anzahl der Öffnungszyklen, die das Kraftstoffventil je Motorzyklus öffnet, wird berechnet und auf einen ganzzahligen Wert gerundet.**

**Aus der** DE 28 02 634 A1 **geht ein Kraftstoffzuführsystem für eine Brennkraftmaschine hervor, das eine elektronische Schaltung besitzt, die in Abhängigkeit der Drehzahl der Brennkraftmaschine arbeitet. Eine in Abhängigkeit der Maschinendrehzahl stehende elektrische Frequenz wird mit einer durch die Bedienungsperson von Hand wählbaren Bezugsfrequenz verglichen. Anhand des Vergleichsergebnisses wird ein Steuerventil der Einspritzvorrichtung angesteuert, um die Maschinendrehzahl an die vorbestimmte maximale Drehzahl anzupassen.**

**Aus der** AT 408 250 B **geht eine Zweitaktbrennkraftmaschine hervor, bei der der Kraftstoff in den Brennraum eingespritzt wird. Die je Arbeitsspiel einzuspritzende Kraftstoffmenge wird im Teillastbereich für einzelne Arbeitsspiele periodisch ausgesetzt.**

Der Erfindung liegt die Aufgabe zugrunde, ein Verfahren zum Betrieb eines Verbrennungsmotors der gattungsgemäßen Art zu schaffen, das einen vorteilhaften Betrieb des Verbrennungsmotors ermöglicht.

Diese Aufgabe wird durch ein Verfahren mit den Merkmalen des Anspruchs 1 gelöst.

Es ist vorgesehen, dass in einem ersten Betriebszustand die Frequenzen, mit denen das Ventil, das den Kraftstoff zuführt und das Ventil, das den Ansaugkanal mit dem Kurbelgehäuse verbindet, geöffnet werden, aufeinander abgestimmt sind. Dadurch wird insbesondere sichergestellt, dass in dem Bereich des Ansaugkanals, in den das zweite Ventil den Kraftstoff zuführt, zu den Zeitpunkten, zu denen das zweite Ventil geöffnet ist, ein ausreichender Unterdruck herrscht, um tatsächlich einen Kraftstofffluss in den Ansaugkanal zu erreichen. Dies ist insbesondere in einem Betriebszustand vorgesehen, in dem der Druck im Ansaugkanal stark schwankt. Auch für andere Betriebszustände kann eine derartige Steuerung der Kraftstoffzufuhr jedoch vorteilhaft sein. In einem zweiten Betriebszustand ist vorgesehen, dass das zweite Ventil unabhängig von der ersten Frequenz, mit der das erste Ventil den Ansaugkanal mit dem Kurbelgehäuse verbindet, geöffnet wird. Dadurch kann eine einfache Steuerung erreicht werden. Gleichzeitig kann die Anzahl der Schaltzyklen dadurch, dass die Frequenzen nicht aufeinander abgestimmt sind, durch entsprechende Wahl der zweiten Frequenz verringert werden. Dadurch wird eine erhöhte Lebensdauer des zweiten Ventils erreicht.

Die Abstimmung der ersten Frequenz auf die zweite Frequenz erfolgt vorteilhaft dadurch, dass die erste Frequenz genauso groß ist wie die zweite Frequenz, dass die erste Frequenz ein ganzzahliges Vielfaches der zweiten Frequenz ist, oder dass die zweite Frequenz ein ganzzahliges Vielfaches der ersten Frequenz ist. Besonders vorteilhaft sind die beiden Frequenzen gleich oder die zweite Frequenz ist kleiner als die erste Frequenz, so dass die Anzahl der Schaltzyklen des zweiten Ventils verringert ist. Im zweiten Betriebszustand wird das zweite Ventil unabhängig von der ersten Frequenz geöffnet. Die zweite Frequenz ist demnach in dem zweiten Betriebszustand nicht auf die erste Frequenz abgestimmt. Vorteilhaft ist das Verhältnis von erster Frequenz zu zweiter Frequenz im zweiten Betriebszustand nicht konstant. Dadurch ergeben sich Verschiebungen zwischen den Öffnungszeiten der beiden Ventile, die sich von Motorzyklus zu Motorzyklus ändern. Die zweite Frequenz ist dabei vorteilhaft kleiner als die erste Frequenz. Dadurch kann die Lebensdauer des zweiten Ventils erhöht werden.

Im ersten Betriebszustand sind die erste Frequenz und die zweite Frequenz vorteilhaft von der Drehzahl des Verbrennungsmotors abhängig. Vorteilhaft liegt im ersten Betriebszustand die Zeitspanne, während der das zweite Ventil zur Zufuhr von Kraftstoff von der Steuereinrichtung geöffnet wird, mindestens teilweise in einer Zeitspanne, während der das erste Ventil geöffnet ist. Dadurch kann auf einfache Weise erreicht werden, dass ein ausreichender Unterdruck in dem Bereich des Ansaugkanals herrscht, in den der Kraftstoff zugeführt wird, und so eine ausreichende Kraftstoffmenge in den Ansaugkanal zugeführt wird. Der Kraftstoff wird dabei vorteilhaft aufgrund des im Ansaugkanal herrschenden Unterdrucks zugeführt. Der Druck des zugeführten Kraftstoffs ist vorteilhaft gering und liegt im Bereich des Kurbelgehäusedrucks oder geringfügig darüber. Vorteilhaft beträgt der Kraftstoffdruck weniger als 2 bar Überdruck. Bei geringen Drücken des zugeführten Kraftstoffs ist die Menge des zugeführten Kraftstoffs stark vom Unterdruck im Ansaugkanal abhängig. Sind die Frequenzen, mit denen die Ventile öffnen, und die Öffnungszeitpunkte nicht aufeinander abgestimmt, so kann die zugeführte Kraftstoffmenge von Motorzyklus zu Motorzyklus stark schwanken, und es kann sich ein unruhiger Lauf des Verbrennungsmotors ergeben.

Vorteilhaft mündet mindestens ein Kraftstoffkanal in den Ansaugkanal. Das zweite Ventil steuert insbesondere die über den mindestens einen Kraftstoffkanal in den Ansaugkanal zugeführte Kraftstoffmenge. Das zweite Ventil ist demnach kein Einspritzventil, das den Kraftstoff direkt in den Ansaugkanal zuführt, sondern ein Schaltventil, das einen in den Ansaugkanal führenden Kraftstoffkanal öffnet oder schließt. Das erste Ventil wird durch einen Kolbenmantel eines in einem Zylinder des Verbrennungsmotors hin- und hergehend gelagerten Kolbens gebildet, der mit einer Einlassöffnung des Ansaugkanals im Kurbelgehäuse zusammenwirkt. Die Steuerzeiten des ersten Ventils sind dadurch von der Drehzahl abhängig und innerhalb jedes Motorzyklus bezogen auf den Kurbelwellenwinkel fest. Das Ventil öffnet und schließt bei jedem Motorzyklus genau einmal. Das zweite Ventil besitzt vorteilhaft genau zwei Schaltzustände, nämlich einen vollständig geöffneten und einen vollständig geschlossenen Schaltzustand. Das zweite Ventil ist demnach ein digital schaltendes Ventil. Ein teilweises Öffnen des zweiten Ventils, beispielsweise, um die zugeführte Kraftstoffmenge gegenüber einem vollständig geöffneten Ventil zu verringern, ist bei einem Ventil mit genau zwei Schaltzuständen nicht möglich. Dadurch, dass das Ventil nur zwei Schaltzustände besitzt, ergibt sich eine einfache Ansteuerung des Ventils. Es kann ein einfach aufgebautes Ventil zum Einsatz kommen. Die Steuerung der zugeführten Kraftstoffmenge erfolgt ausschließlich über die Zeitspanne, während der das zweite Ventil geöffnet oder geschlossen ist. Die je Zeiteinheit in den Ansaugkanal angesaugte Kraftstoffmenge variiert dabei in Abhängigkeit des Unterdrucks, der im Ansaugkanal herrscht. Das zweite Ventil ist vorteilhaft ein elektromagnetisches Ventil.

Der erste und der zweite Betriebszustand umfassen unterschiedliche Drehzahlbereiche, wobei die Drehzahlen des ersten Drehzahlbereichs des ersten Betriebszustands niedriger als die Drehzahlen des zweiten Drehzahlbereichs des zweiten Betriebszustands sind. Der erste Drehzahlbereich ist demnach ein niedrigerer Drehzahlbereich als der zweite Drehzahlbereich. Der erste Betriebszustand umfasst vorteilhaft den Startbetrieb. Der Startbetrieb ist dabei der Betrieb des Verbrennungsmotors vom Beginn des Anwerfvorgangs bis zur ersten Verbrennung. Der erste Betriebszustand umfasst vorteilhaft den Leerlaufbetrieb. Der zweite Betriebszustand umfasst vorteilhaft den Volllastbetrieb. Vorteilhaft schaltet die Ansteuerung des zweiten Ventils bei Drehzahlen in der Größenordnung von etwa 3.500 bis etwa 4.000 Umdrehungen pro Minute von der Ansteuerung des zweiten Ventils gemäß dem ersten Betriebszustand zur Ansteuerung des zweiten Ventils gemäß dem zweiten Betriebszustand, in dem das zweite Ventil unabhängig von der ersten Frequenz geöffnet wird, um.

Vorteilhaft wird die zugeführte Kraftstoffmenge zur Begrenzung der Drehzahl des Verbrennungsmotors in einem oberen Drehzahlbereich erhöht oder reduziert. Der erste Betriebszustand umfasst vorteilhaft den oberen Drehzahlbereich. Das zweite Ventil wird in dem oberen Drehzahlbereich vorteilhaft nur dann geöffnet, wenn auch das erste Ventil geöffnet ist. Dadurch ist eine sehr genaue Kraftstoffdosierung möglich. Die Drehzahlbegrenzung kann entweder durch Erhöhung der zugeführten Kraftstoffmenge, also durch Überfetten, oder durch Verringerung der zugeführten Kraftstoffmenge, also durch Abmagern, erfolgen.

Ausführungsbeispiele der Erfindung werden im Folgenden anhand der Zeichnung erläutert. Es zeigen:
- Fig. 1: einen schematischen Längsschnitt durch eine Motorsäge,
- Fig. 2: einen schematischen Schnitt durch die Motorsäge aus Fig. 1 entlang der Linie II-II in Fig. 1,
- Fig. 3: eine schematische Darstellung des Vergasers der Motorsäge aus den Figuren 1 und 2,
- Fig. 4: ein Diagramm, das schematisch den Druckverlauf im Kurbelgehäuse des Verbrennungsmotors der Motorsäge zeigt,
- Fig. 5: ein Diagramm, das schematisch den Druckverlauf im Ansaugkanal der Motorsäge bei unterschiedlichen Betriebszuständen zeigt,
- Fig. 6: ein Diagramm, das die Öffnungszeiten der Ventile des Verbrennungsmotors in einem ersten Betriebszustand zeigt,
- Fig. 7: ein Diagramm, das die Öffnungszeiten der Ventile des Verbrennungsmotors in einem zweiten Betriebszustand zeigt,
- Fig. 8: ein Diagramm, das den Verlauf der Frequenzen, mit denen die Ventile geöffnet werden, für mehre Ausführungsbeispiele zeigt.

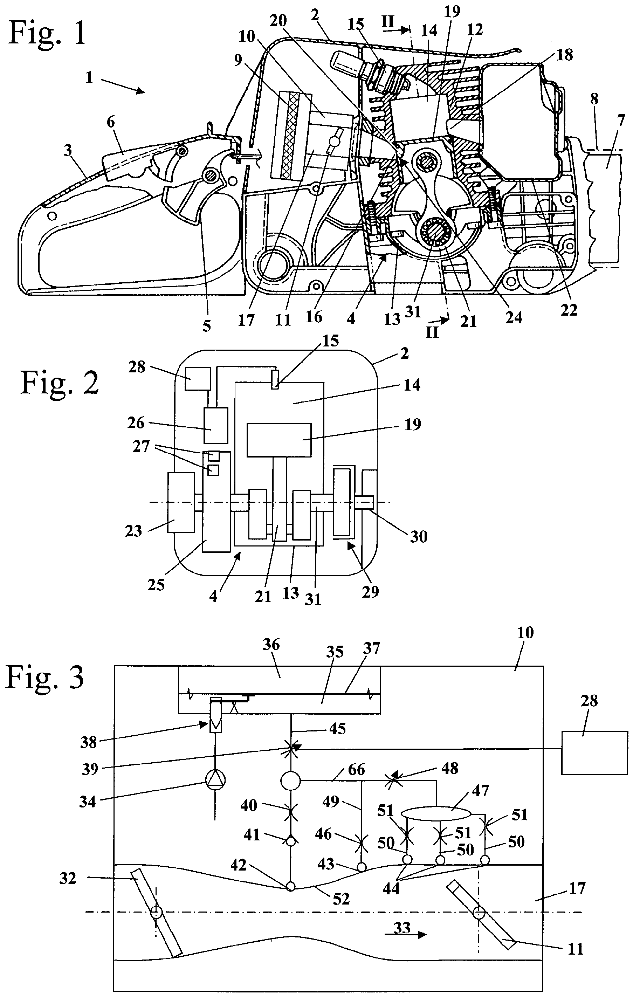

Fig. 1 zeigt als Ausführungsbeispiel für ein handgeführtes Arbeitsgerät eine Motorsäge 1 mit einem Verbrennungsmotor 4. Das erfindungsgemäße Verfahren kann jedoch auch in Verbrennungsmotoren anderer handgeführter Arbeitsgeräte wie beispielsweise Trennschleifern, Freischneidern, Erntegeräten, Saug-/Blasgeräten, Rasenmähern oder dgl. eingesetzt werden. Die Motorsäge 1 besitzt ein Gehäuse 2, an dem ein hinterer Handgriff 3 festgelegt ist. Am hinteren Handgriff 3 sind ein Gashebel 5 sowie eine Gashebelsperre 6 schwenkbar gelagert. An der dem hinteren Handgriff 3 abgewandten Seite des Gehäuses 2 ragt eine Führungsschiene 7 nach vorn, an der eine von dem Verbrennungsmotor 4 angetriebene Sägekette 8 umlaufend angeordnet ist.

Der Verbrennungsmotor 4 saugt Verbrennungsluft über einen Luftfilter 9 durch einen Ansaugkanal 17 an. Ein Abschnitt des Ansaugkanals 17 ist in einem Vergaser 10 ausgebildet, in dem ein Drosselelement 11 schwenkbar gelagert ist. Der Gashebel 5 wirkt auf die Stellung des Drosselelements 10 und steuert so die angesaugte Verbrennungsluftmenge. Der Ansaugkanal 17 mündet an einer Einlassöffnung 16 an einem Zylinder 12 des Verbrennungsmotors 4. Im Zylinder 12 ist ein Kolben 19 hin- und hergehend gelagert. Der Kolben 19 begrenzt einen im Zylinder 12 ausgebildeten Brennraum 14, in den eine Zündkerze 15 ragt.

Der Verbrennungsmotor 4 ist im Ausführungsbeispiel als Einzylindermotor, und zwar als Zweitaktmotor ausgebildet. Der Verbrennungsmotor 4 kann jedoch auch ein gemischgeschmierter Viertaktmotor sein. Der Verbrennungsmotor 4 besitzt ein Kurbelgehäuse 13, in das die Einlassöffnung 16 mündet. Die Verbindung der Einlassöffnung 16 mit dem Innenraum des Kurbelgehäuses 13 ist von einem Kolbenmantel 20 des Kolbens 19 gesteuert. Der Kolbenmantel 20 bildet mit der Einlassöffnung 16 ein erstes Ventil 24, das in Abhängigkeit der Drehzahl des Verbrennungsmotors 4 jeweils zu festgelegten Stellungen des Kolbens 19 und einer im Kurbelgehäuse 13 drehbar gelagerten Kurbelwelle 31 öffnet und schließt. Bei seiner Auf- und Ab-Bewegung treibt der Kolben 19 die Kurbelwelle 31 über ein Pleuel 21 rotierend an.

Das erste Ventil 24 ist im Bereich des oberen Totpunkts des Kolbens 19 geöffnet. Bei geöffnetem erstem Ventil 24 ist der Ansaugkanal 17 über die Einlassöffnung 16 mit dem Innenraum des Kurbelgehäuses 13 verbunden. In dieser Stellung des Kolbens 19 wird Verbrennungsluft und der Verbrennungsluft im Vergaser 10 zugeführter Kraftstoff in den Innenraum des Kurbelgehäuses 13 angesaugt. Beim Abwärtshub des Kolbens 19, also bei der Bewegung des Kolbens 19 in Richtung auf das Kurbelgehäuse 13, wird das Kraftstoff/Luft-Gemisch im Innenraum des Kurbelgehäuses 13 komprimiert und tritt im Bereich des unteren Totpunkts des Kolbens 19 über nicht gezeigte Überströmkanäle in den Brennraum 14 über. Beim darauf folgenden Aufwärtshub des Kolbens 19, also bei der Bewegung des Kolbens 19 vom Kurbelgehäuse 13 weg, wird das Gemisch im Brennraum 14 komprimiert und im Bereich des oberen Totpunkts des Kolbens 19 von der Zündkerze 15 gezündet. Aus dem Brennraum 14 führt eine Auslassöffnung 18, die beim Abwärtshub des Kolbens 19 vom Kolbenmantel 20 geöffnet wird. Dadurch können Abgase aus dem Brennraum 14 ausströmen. Am Zylinder 12 ist ein Abgasschalldämpfer 22 angeordnet, in den die Abgase einströmen.

Wie Fig. 2 zeigt, besitzt die Motorsäge 1 zum Anwerfen des Verbrennungsmotors 4 eine Anwerfvorrichtung 23, die beispielsweise ein Seilzugstarter oder eine elektrisch angetriebene Anwerfvorrichtung sein kann. An der Kurbelwelle 31 ist ein Schwungrad 25 festgelegt, das im Ausführungsbeispiel zwischen dem Kurbelgehäuse 13 und der Anwerfvorrichtung 23 angeordnet ist. Das Schwungrad 25 kann beispielsweise ein Lüfterrad sein. Am Außenumfang des Schwungrads 25 sind Magnete 27 angeordnet, die in einem benachbart zum Außenumfang des Schwungrads 25 angeordneten Zündmodul 26 eine Spannung induzieren. Das Zündmodul 26 ist mit der Zündkerze 15 verbunden und versorgt die Zündkerze 15 mit der im Zündmodul 26 induzierten Energie zur Bereitstellung eines Zündfunkens. Mit dem Zündmodul 26 ist außerdem eine Steuereinrichtung 28 verbunden. Die Steuereinrichtung 28 kann auch in das Zündmodul 26 integriert sein. Die Steuereinrichtung 28 bestimmt den Zeitpunkt, zu dem die Zündung von der Zündkerze 15 ausgelöst wird. Die Steuereinrichtung 28 steuert außerdem die dem Verbrennungsmotor 4 zugeführte Kraftstoffmenge durch Ansteuerung eines in Fig. 3 gezeigten zweiten Ventils 39. An der dem Schwungrad 25 abgewandten Seite des Kurbelgehäuses 13 ist die Kurbelwelle 31 mit einer Fliehkraftkupplung 29 verbunden. An der Abtriebsseite der Fliehkraftkupplung 29 ist ein Antriebsritzel 30 zum Antrieb der Sägekette 8 festgelegt.

Fig. 3 zeigt den Vergaser 10 schematisch. Im Ausführungsbeispiel ist der Vergaser 10 als üblicher Membranvergaser ausgebildet. Der Vergaser 10 besitzt eine Kraftstoffpumpe 34, die beispielsweise eine vom Druck im Innenraum des Kurbelgehäuses 13 angetriebene Membranpumpe sein kann. Die Kraftstoffpumpe 34 fördert Kraftstoff in eine Regelkammer 35 des Vergasers 10. Am Einlass der Regelkammer 35 ist ein Einlassventil 38 angeordnet, das die in die Regelkammer 35 übertretende Kraftstoffmenge steuert. Die Regelkammer 35 ist über eine Regelmembran 37 von einer Kompensationskammer 36 getrennt. In der Kompensationskammer 36 herrscht ein Referenzdruck, der beispielsweise der Druck im Reinraum des Luftfilters 9 sein kann. Die Stellung des Einlassventils 38 ist an die Stellung der Regelmembran 37 gekoppelt. Herrscht in der Regelkammer 35 gegenüber der Kompensationskammer 36 ein Unterdruck, so öffnet das Einlassventil 38. Ist der Druck ausgeglichen oder herrscht in der Regelkammer 35 ein Überdruck gegenüber der Kompensationskammer, so schließt das Einlassventil 38. Das Einlassventil 38 kann federbeaufschlagt sein, um das Druckniveau in der Regelkammer 35 gegenüber dem in der Kompensationskammer 36 zu ändern und einzustellen und die Öffnungscharakteristik des Einlassventils 38 anzupassen.

Aus der Regelkammer 35 führt mindestens ein Kraftstoffkanal 45. Im Ausführungsbeispiel ist genau ein Kraftstoffkanal 45 vorgesehen. Die durch den Kraftstoffkanal 45 strömende Kraftstoffmenge wird vom zweiten Ventil 39 gesteuert. Das zweite Ventil 39 ist als elektromagnetisches Ventil ausgebildet. Das zweite Ventil 39 wird von der Steuereinrichtung 28 angesteuert. Das zweite Ventil 39 besitzt im Ausführungsbeispiel genau zwei Schaltzustände, nämlich einen vollständig geöffneten und einen vollständig geschlossenen Zustand. Die Steuereinrichtung 28 steuert die dem Ansaugkanal 17 zugeführte Kraftstoffmenge durch Steuerung des Zeitraums, in dem das zweite Ventil 39 geöffnet ist.

Der Kraftstoffkanal 45 mündet über eine Drossel 40 und ein Rückschlagventil 41 an einer Hauptkraftstofföffnung 42 in den Ansaugkanal 17. Die Hauptkraftstofföffnung 42 ist im Bereich eines Venturis 52 angeordnet. Der Kraftstoff wird aufgrund des im Ansaugkanal 17 herrschenden Unterdrucks in den Ansaugkanal 17 angesaugt. Aus dem Kraftstoffkanal 45 zweigt ein Kraftstoffkanal 66 ab. Im Kraftstoffkanal 66 ist ein Einstellventil 48 vorgesehen. Der Kraftstoffkanal 66 mündet in eine Kraftstoffkammer 47, die als Leerlaufkammer ausgebildet ist. Über das Einstellventil 48 kann die im Leerlauf in den Ansaugkanal 17 zugeführte Kraftstoffmenge eingestellt werden. Das Einstellventil 48 ist vorzugsweise ein Nadelventil. Aus der Kraftstoffkammer 47 führen drei Kraftstoffkanäle 50, die jeweils eine Drossel 51 besitzen. Jeder Kraftstoffkanal 50 mündet an einer Leerlaufkraftstofföffnung 44 in den Ansaugkanal 17. Die Leerlaufkraftstofföffnungen 44 sind im Bereich des Drosselelements 11 angeordnet. Das Drosselelement 11 ist im Ausführungsbeispiel als Drosselklappe ausgebildet. Ist das Drosselelement 11 vollständig geschlossen, so sind zwei der Leerlaufkraftstofföffnungen 44 bezogen auf eine Strömungsrichtung 33 im Ansaugkanal 17 stromauf und eine der Leerlaufkraftstofföffnungen 44 stromab des Drosselelements 11 angeordnet. Die Strömungsrichtung 33 ist die Richtung, in der Verbrennungsluft vom Luftfilter 9 zur Einlassöffnung 16 strömt. Im Ausführungsbeispiel ist ein abhängiges Leerlaufsystem gezeigt. Die in den Kraftstoffkanal 66 und zu den Leerlaufkraftstofföffnungen 44 zugeführte Kraftstoffmenge wird vom zweiten Ventil 39 gesteuert. Es kann jedoch auch vorgesehen sein, dass der Kraftstoffkanal 66 unmittelbar aus der Regelkammer 35 abzweigt und die zu den Leerlaufkraftstofföffnungen 44 zugeführte Kraftstoffmenge nicht vom zweiten Ventil 39 gesteuert ist.

Wie Fig. 3 auch zeigt, zweigt aus dem Kraftstoffkanal 66 ein Kraftstoffkanal 49 ab, der über eine Drossel 46 an einer Nebenkraftstofföffnung 43 mündet. Wie Fig. 3 auch zeigt, ist stromauf des Drosselelements 11 im Ansaugkanal 17 ein Chokeelement 32 angeordnet, das im Ausführungsbeispiel als Chokeklappe ausgebildet ist. Beim Anwerfen des Verbrennungsmotors 4 ist das Chokeelement 32 mindestens teilweise geschlossen.

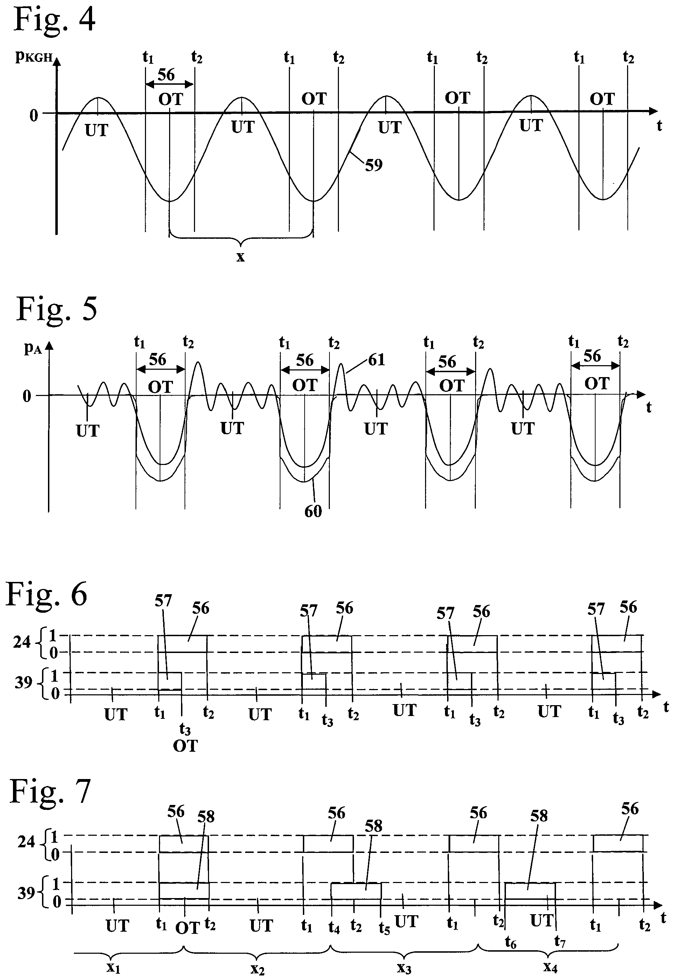

Fig. 4 zeigt den Verlauf des Kurbelgehäusedrucks p_{KGH} über mehrere Motorzyklen x. Im Ausführungsbeispiel erstreckt sich jeder Motorzyklus x von einem oberen Totpunkt OT des Kolbens 19 zum darauf folgenden oberen Totpunkt OT des Kolbens 19. Wie die Linie 59 zeigt, verläuft der Kurbelgehäusedruck p_{KGH} stark schwankend. Im oberen Totpunkt OT des Kolbens 19 ist der Kurbelgehäusedruck p_{KGH} am kleinsten. Gegenüber dem Umgebungsdruck herrscht Unterdruck im Kurbelgehäuse 13. Im unteren Totpunkt UT des Kolbens 19 ist der Kurbelgehäusedruck p_{KGH} am größten. Der Kurbelgehäusedruck p_{KGH} ist dabei als Differenz gegenüber dem Umgebungsdruck aufgetragen. Im unteren Totpunkt UT des Kolbens 19 ist der Kurbelgehäusedruck p_{KGH} größer als der Umgebungsdruck. Fig. 4 zeigt auch den Öffnungszeitpunkt t₁ und den Schließzeitpunkt t₂ des ersten Ventils 24.

Das erste Ventil 24 öffnet zu einem Öffnungszeitpunkt t₁, der vor dem oberen Totpunkt OT liegt und schließt zu einem Schließzeitpunkt t₂ nach dem oberen Totpunkt OT. Dabei ist als Öffnungszeitpunkt t₁ und als Schließzeitpunkt t₂ jeweils der Zeitpunkt angegeben, zu dem die Einlassöffnung 16 beginnt zu öffnen oder beginnt zu schließen. Das erste Ventil 24 ist über eine Zeitspanne 56 geöffnet, die sich vom Öffnungszeitpunkt t₁ bis zum Schließzeitpunkt t₂ erstreckt.

Fig. 5 zeigt den Verlauf des Ansaugkanaldrucks p_{A}. Die Linie 60 zeigt den Druckverlauf bei niedrigen Drehzahlen. Bei niedrigen Drehzahlen kann sich der Unterdruck aus dem Kurbelgehäuse 13 in den Ansaugkanal 17 fortsetzen, solange das erste Ventil 24 geöffnet ist. In den Zeiträumen, in denen das erste Ventil 24 geschlossen ist, stellt sich im Ansaugkanal 17 über den Luftfilter 9 etwa Umgebungsdruck ein. Der Druck im Ansaugkanal 17 entspricht vom Öffnungszeitpunkt t₁ bis zum Schließzeitpunkt t₂ etwa dem Druckverlauf des Kurbelgehäusedrucks p_{KGH}. Vom Schließzeitpunkt t₂ bis zum darauf folgenden Öffnungszeitpunkt t₁ entspricht der Ansaugkanaldruck p_{A} etwa dem Umgebungsdruck.

Bei hohen Drehzahlen kann der Druckausgleich zwischen Umgebungsdruck und dem Ansaugkanaldruck p_{A} über den Luftfilter 9 nicht oder nur teilweise stattfinden, da die Zeit für einen Druckausgleich nicht ausreicht. Der sich im Ansaugkanal 17 etwa einstellende Druckverlauf ist schematisch durch eine Linie 61 gezeigt. Es stellt sich ein schwankender Druck ein, bei dem sich Zeiträume, in denen der Druck oberhalb des Umgebungsdrucks liegt und Zeiträume, in denen der Druck unterhalb des Umgebungsdrucks liegt, abwechseln. Der Druck schwankt um den Umgebungsdruck, wobei die Schwankungen motor- und drehzahlabhängig unterschiedlich sein können. Fig. 5 zeigt exemplarisch einen möglichen Druckverlauf bei hohen Drehzahlen.

Fig. 6 zeigt die Öffnungs- und Schließzeitpunkte für das erste Ventil 24 und das zweite Ventil 39 für einen ersten Betriebszustand. Der erste Betriebszustand umfasst vorteilhaft niedrige Drehzahlen, bei denen der Druckverlauf im Ansaugkanal 17 etwa dem durch die Linie 60 in Fig. 5 angedeuteten Druckverlauf entspricht. Das erste Ventil 24 öffnet zu Öffnungszeitpunkten t₁ und schließt zu Schließzeitpunkten t₂, die den in Fig. 4 und 5 gezeigten Zeitpunkten t₁ und t₂ entsprechen. Das zweite Ventil 39 wird vorteilhaft so angesteuert, dass die Zeitspanne 57, zu der das zweite Ventil 39 geöffnet ist, mindestens teilweise innerhalb der Zeitspanne 56 liegt. Im Ausführungsbeispiel liegt die Zeitspanne 57 vollständig in der Zeitspanne 56. Das zweite Ventil 39 öffnet zeitgleich mit dem ersten Ventil 24 zum Öffnungszeitpunkt t₁. Das zweite Ventil 39 schließt zu einem Schließzeitpunkt t₃, der vor dem Schließzeitpunkt t₂ liegt. Im Ausführungsbeispiel liegt der Schließzeitpunkt t₃ etwa im oberen Totpunkt OT. Der Schließzeitpunkt t₃ wird vorteilhaft von der Steuereinrichtung 28 in Abhängigkeit der zuzuführenden Kraftstoffmenge gesteuert. Wie Fig. 6 zeigt, sind sowohl das erste Ventil 24 als auch das zweite Ventil 39 entweder vollständig geschlossen oder vollständig geöffnet. Beide Ventile besitzen genau zwei Schaltzustände. In Fig. 6 wird der erste, vollständig geschlossene Schaltzustand mit "0" und der zweite, vollständig geöffnete Schaltzustand mit "1 " bezeichnet.

Fig. 7 zeigt ein Ausführungsbeispiel für die Ansteuerung des zweiten Ventils 39 in einem zweiten Betriebszustand, in dem der Druckverlauf im Ansaugkanal 17 etwa dem in Fig. 5 durch die Linie 61 angedeuteten Verlauf entspricht. Der Druck bei geschlossenem erstem Ventil 24 schwankt um den Umgebungsdruck, so dass sich bei geschlossenem erstem Ventil 24 Zeiträume mit Unterdruck und Zeiträume mit Überdruck ergeben, die sich in schneller Folge abwechseln. Aufgrund der Zeitabschnitte, in denen Unterdruck herrscht, kann auch bei geschlossenem erstem Ventil 24 Kraftstoff in den Ansaugkanal 17 angesaugt werden.

Im Ausführungsbeispiel nach Fig. 7 sind drei Öffnungs- und Schließvorgänge des zweiten Ventils 39 gezeigt. In einem ersten Motorzyklus x₁ öffnet das zweite Ventil 39 zeitgleich mit dem ersten Ventil 24 zum Öffnungszeitpunkt t₁ und schließt zeitgleich mit dem ersten Ventil 24 zum Schließzeitpunkt t₂. Das zweite Ventil 39 ist über eine Zeitspanne 58 geöffnet, die genauso lang ist wie die Zeitspanne 56, zu der das erste Ventil 24 geöffnet ist, und mit dieser zusammenfällt. In einem zweiten Motorzyklus x₂ öffnet das erste Ventil 24 zu einem Öffnungszeitpunkt t₁. Das zweite Ventil 39 öffnet erst im darauf folgenden Motorzyklus x₃, und zwar kurz nach dem oberen Totpunkt OT zu einem Öffnungszeitpunkt t₄. Das erste Ventil 24 schließt danach zu einem Schließzeitpunkt t₂. Erst danach schließt das zweite Ventil 39 zu einem Schließzeitpunkt t₅. Die Zeitspannen 56 und 58, zu denen das erste Ventil 24 bzw. das zweite Ventil 39 geöffnet sind, sind gleich lang, überlappen sich aber nur teilweise. Am Ende des dritten Motorzyklus x₃ öffnet das erste Ventil 24 zum Öffnungszeitpunkt t₁ und schließt im vierten Motorzyklus x₄ zum Schließzeitpunkt t₂. Während der Zeitspanne 56 ist das zweite Ventil 39 nicht geöffnet. Das zweite Ventil 39 öffnet zu einem Öffnungszeitpunkt t₆, der nach dem Schließzeitpunkt t₂ des ersten Ventils 24 liegt und schließt zu einem Schließzeitpunkt t₇, der im Ausführungsbeispiel nach dem unteren Totpunkt UT liegt. In diesem Motorzyklus überlappen sich die Zeitspannen 56 und 58 nicht. Aufgrund des im Ansaugkanal 17 auch bei geschlossenem erstem Ventil 24 herrschenden zeitweiligen Unterdrucks wird während der Zeitspanne 58 dennoch Kraftstoff in den Ansaugkanal 17 zugeführt.

Bei der in Fig. 6 gezeigten Beschaltung des zweiten Ventils 39 öffnen das erste Ventil 24 und das zweite Ventil 39 mit der gleichen Frequenz, die genau der Drehzahl des Verbrennungsmotors 4 entspricht. Die beiden Ventile 24, 39 sind dabei vorteilhaft gleichzeitig geöffnet. Es kann jedoch auch vorgesehen sein, dass ein zeitlicher Versatz zwischen den Öffnungszeitpunkten t₁ der beiden Ventile 24 und 39 vorgesehen ist. Dies ist insbesondere dann zweckmäßig, wenn der Unterdruck aus dem Innenraum des Kurbelgehäuses 13 beispielsweise aufgrund einer entsprechend großen Länge des Ansaugkanals 17 erst zeitverzögert an der Hauptkraftstofföffnung 42 des Ansaugkanals 17 anliegt. Das zweite Ventil 39 öffnet vorteilhaft dann, wenn der Unterdruck aus dem Innenraum des Kurbelgehäuses 13 an der Hauptkraftstofföffnung 42 herrscht.

Bei der in Fig. 7 gezeigten Beschaltung des zweiten Ventils 39 ist die Frequenz, mit der das zweite Ventil 39 geöffnet wird, kleiner als die Frequenz des ersten Ventils 24. Die Frequenz des zweiten Ventils 39 ist dabei weniger als halb so groß wie die Frequenz des ersten Ventils 24. Wann das zweite Ventil 39 geöffnet und geschlossen wird, wird allein aufgrund der zuzuführenden Kraftstoffmenge festgelegt. Die Frequenz, mit der das erste Ventil 24 geöffnet wird, wird dabei nicht berücksichtigt. Dadurch ergeben sich Verschiebungen zwischen den Zeitspannen 56, zu denen das erste Ventil 24 geöffnet ist, und den Zeitspannen 58, zu denen das zweite Ventil 39 geöffnet ist, wobei die Verschiebungen sich von Motorzyklus zu Motorzyklus ändern. Die Frequenz, mit der das zweite Ventil 39 geöffnet wird, ist dabei vorteilhaft kleiner als die Frequenz, mit der das erste Ventil 24 geöffnet wird. Dadurch kann die Lebensdauer des zweiten Ventils 39 erhöht werden. Dadurch, dass auch bei geschlossenem erstem Ventil 24 zeitweilig Unterdruck im Ansaugkanal 17 herrscht, kann eine ausreichend große Kraftstoffmenge zugeführt werden. Insbesondere bei hohen Drehzahlen, beispielsweise bei Volllast, ist die sich durch die Phasenverschiebung bedingte Verschiebung der Öffnungszeiten der Ventile 24 und 39 ergebende ungenauere Dosierung des Kraftstoffs tolerierbar.

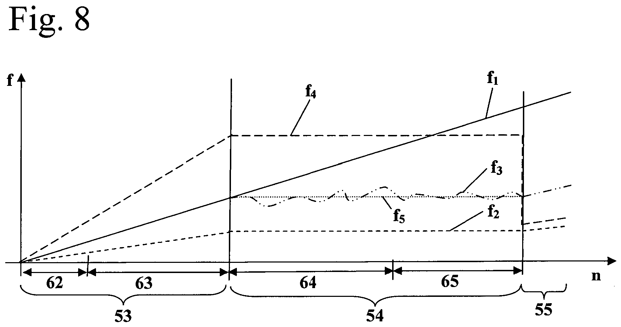

Fig. 8 zeigt schematisch den Verlauf einer ersten Frequenz f₁, mit der das erste Ventil 24 geöffnet wird, über der Drehzahl n. Die Frequenz f₁ ist proportional zur Drehzahl n. Der Verbrennungsmotor 4 besitzt einen ersten Drehzahlbereich 53, der einen Startdrehzahlbereich 62 und einen Leerlaufdrehzahlbereich 63 umfasst. Der Verbrennungsmotor 4 besitzt einen zweiten Drehzahlbereich 54, der oberhalb des ersten Drehzahlbereichs 53 liegt und der einen Teillastdrehzahlbereich 64 und einen Volllastdrehzahlbereich 65 umfasst. Der Verbrennungsmotor 4 besitzt außerdem einen oberen Drehzahlbereich 55, der oberhalb des zweiten Drehzahlbereichs 54 liegt. Im oberen Drehzahlbereich 55 wird die Drehzahl n des Verbrennungsmotors 4 von der Steuereinrichtung 28 begrenzt. Der Teillastdrehzahlbereich 64 beginnt vorteilhaft bei einer Drehzahl von etwa 3.500 bis etwa 4.000 Umdrehungen pro Minute. Der Volllastdrehzahlbereich 65 umfasst vorteilhaft mindestens teilweise Drehzahlen von etwa 8.000 bis etwa 12.000 Umdrehungen pro Minute.

In Fig. 8 ist schematisch ein exemplarischer Verlauf einer zweiten Frequenz f₂ mit gestrichelter Linie eingezeichnet. Die zweite Frequenz f₂ entspricht der Frequenz, mit der das zweite Ventil 39 geöffnet wird. Im ersten Drehzahlbereich 53 verläuft die zweite Frequenz f₂ proportional zur Drehzahl n. Die zweite Frequenz f₂ ist dabei bei jeder Drehzahl n des ersten Drehzahlbereichs 53 genau halb so groß wie die erste Frequenz f₁. Das zweite Ventil 39 wird demnach bei jedem zweiten Motorzyklus x geöffnet.

Im zweiten Drehzahlbereich 54 ist die zweite Frequenz f₂ konstant. Dadurch ändert sich das Verhältnis zwischen der ersten Frequenz f₁ und der zweiten Frequenz f₂ im zweiten Drehzahlbereich 54 in Abhängigkeit der Drehzahl n. Die beiden Ventile 24 und 39 öffnen dadurch ungesteuert je nach Motorzyklus gleichzeitig oder zeitversetzt zueinander. Die Zeitspannen 56 und 58, zu denen die Ventile 24 und 39 geöffnet sind, liegen je nach Motorzyklus gleichzeitig, teilweise überlappend oder vollständig zeitversetzt. Die Frequenzen f₁ und f₂ sind nicht aufeinander abgestimmt.

Im oberen Drehzahlbereich 55 verläuft die zweite Frequenz f₂ proportional zur ersten Frequenz f₁. Die zweite Frequenz f₂ beträgt dabei ein Viertel der ersten Frequenz f₁. Im oberen Drehzahlbereich 55 wird dadurch bei jedem vierten Motorzyklus x Kraftstoff über das zweite Ventil 39 zugeführt. Die beiden Ventile 24 und 39 sind dabei vorteilhaft mindestens teilweise gleichzeitig geöffnet. Dadurch ist im oberen Drehzahlbereich 55 eine sehr genaue Kraftstoffdosierung möglich. Dies ist insbesondere bei der Drehzahlbegrenzung des Verbrennungsmotors 4 durch Anfetten oder Abmagern des zugeführten Kraftstoff/Luft-Gemischs vorteilhaft.

In Fig. 8 ist beispielhaft ein weiterer Verlauf einer zweiten Frequenz f₃ für das zweite Ventil 39 eingezeichnet. Im ersten Drehzahlbereich 53 entspricht die zweite Frequenz f₃ der ersten Frequenz f₁. Im zweiten Drehzahlbereich 54 schwankt die zweite Frequenz f₃. Die zweite Frequenz f₃ kann dabei in Abhängigkeit der Drehzahl n festgelegt sein. Es kann jedoch auch vorgesehen sein, dass die zweite Frequenz f₃ zusätzlich anhand weiterer Parameter, beispielsweise anhand der Motorlast, vor der Steuereinrichtung 28 festgelegt wird und kein fester Zusammenhang zwischen der Drehzahl n und der zweiten Frequenz f₃ besteht, wie dies in Fig. 8 angedeutet ist. Im oberen Drehzahlbereich 55 verläuft die zweite Frequenz f₃ proportional zur ersten Frequenz f₁. Die zweite Frequenz f₃ ist im oberen Drehzahlbereich 55 jeweils halb so groß wie die erste Frequenz f₁. Es kann auch vorteilhaft sein, das zweite Ventil 39 im zweiten Drehzahlbereich 54 mit einer konstanten Frequenz f₅ zu öffnen. Dies ist in Fig. 8 mit gepunkteter Linie gezeigt. Der Verlauf der fünften Frequenz f₅ entspricht im ersten Drehzahlbereich 53 dem der ersten Frequenz f₁ und im oberen Drehzahlbereich 55 dem der dritten Frequenz f₃.

Ein weiterer exemplarischer Verlauf ist durch eine zweite Frequenz f₄ in Fig. 8 gezeigt. Die zweite Frequenz f₄ ist im ersten Drehzahlbereich 53 proportional zur Drehzahl n und doppelt so groß wie die erste Frequenz f₁. Im zweiten Drehzahlbereich 54 ist die zweite Frequenz f₄ konstant. Die zweite Frequenz f₄ entspricht dabei der höchsten Frequenz f₄ im ersten Drehzahlbereich 53. Das Verhältnis zwischen erster Frequenz f₁ und zweiter Frequenz f₄ ändert sich dadurch im zweiten Drehzahlbereich 54 bei steigender Drehzahl n kontinuierlich. Im oberen Drehzahlbereich 55 nimmt die zweite Frequenz f₄ sprunghaft ab, und zwar auf einen Frequenzwert, der einem Drittel der ersten Frequenz f₁ entspricht. Dadurch wird das zweite Ventil 39 im oberen Drehzahlbereich 55 nur zu jedem dritten Motorzyklus geöffnet. Auch die Frequenzen f₁ und f₄ sind im ersten Drehzahlbereich 53 und im oberen Drehzahlbereich 55 aufeinander abgestimmt und im zweiten Drehzahlbereich 54 unabhängig voneinander und nicht aufeinander abgestimmt.

Wie Fig. 8 zeigt, liegt der erste Drehzahlbereich 53 unterhalb des zweiten Drehzahlbereichs 54, umfasst also Drehzahlen, die niedriger als die des zweiten Drehzahlbereichs 54 sind. Im ersten Drehzahlbereich 53 besteht vorteilhaft ein konstantes Verhältnis zwischen der ersten Frequenz f₁ und der zweiten Frequenz f₂, f₃, f₄. Dabei ist vorteilhaft die erste Frequenz f₁ genauso groß wie die zweite Frequenz f₃, ein ganzzahliges Vielfaches der zweiten Frequenz f₂, oder die zweite Frequenz f₄ ist ein ganzzahliges Vielfaches der ersten Frequenz f₁. Dadurch sind die beiden Ventile 24 und 39 in regelmäßig wiederkehrenden Motorzyklen x gleichzeitig oder mit einem gewünschten Zeitversatz zueinander geöffnet. Vorteilhaft sind die beiden Ventile 24 und 39 auch in dem oberen Drehzahlbereich 55 entsprechend der Darstellung in Fig. 6 gleichzeitig geöffnet, wobei das zweite Ventil 39 nicht bei jedem Motorzyklus x öffnet, sondern alle zwei, alle drei oder alle vier Motorzyklen. Auch ein anderes Verhältnis der ersten Frequenz f₁ zur zweiten Frequenz f₂, f₃ oder f₄ im oberen Drehzahlbereich 55 kann vorteilhaft sein. Durch die Abstimmung der Frequenzen im ersten Drehzahlbereich 53 und/ oder im oberen Drehzahlbereich 55 kann eine genaue Dosierung des Kraftstoffs erreicht werden. Insbesondere im ersten Drehzahlbereich 53 kann dadurch ein gleichmäßiges Laufverhalten des Verbrennungsmotors 4 sichergestellt werden.

## Patentansprüche

1. Verfahren zum Betrieb eines Verbrennungsmotors, wobei der Verbrennungsmotor (4) einen Ansaugkanal (17) besitzt, der über ein erstes Ventil (24) in ein Kurbelgehäuse (13) des Verbrennungsmotors (4) mündet, wobei das erste Ventil (24) mit einer ersten Frequenz (f₁) öffnet, und wobei der Verbrennungsmotor (4) ein zweites Ventil (39) besitzt, das die in den Ansaugkanal (17) zugeführte Kraftstoffmenge steuert, wobei die zugeführte Kraftstoffmenge durch Steuerung einer Zeitspanne (57, 58), während der das zweite Ventil (39) bei jedem Motorzyklus (x) offen ist, gesteuert wird, wobei zur Steuerung der zugeführten Kraftstoffmenge eine Steuereinrichtung (28) vorgesehen ist,
**dadurch gekennzeichnet, dass** das erste Ventil (24) durch einen Kolbenmantel (20) eines in einem Zylinder (12) des Verbrennungsmotors (4) hin- und hergehend gelagerten Kolbens (19) gebildet wird, der mit einer Einlassöffnung (16) des Ansaugkanals (17) ins Kurbelgehäuse (13) zusammenwirkt, dass in einem ersten Betriebszustand das zweite Ventil (39) mit einer zweiten Frequenz (f₂, f₃, f₄) geöffnet wird, die auf die erste Frequenz (f₁) abgestimmt ist, und dass in einem zweiten Betriebszustand das zweite Ventil (39) unabhängig von der ersten Frequenz (f₁) geöffnet wird, wobei der erste Betriebszustand einen ersten Drehzahlbereich (53) umfasst, und wobei der zweite Betriebszustand einen zweiten Drehzahlbereich (54) umfasst, wobei die Drehzahlbereiche sich nicht überlappen und Drehzahlen (n) des ersten Drehzahlbereichs (53) niedriger als die Drehzahlen (n) des zweiten Drehzahlbereichs (54) sind.

2. Verfahren nach Anspruch 1,
**dadurch gekennzeichnet, dass** im ersten Betriebszustand die erste Frequenz (f₁) genauso groß wie die zweite Frequenz (f₃) ist, dass die erste Frequenz (f₁) ein ganzzahliges Vielfaches der zweiten Frequenz (f₂) ist oder dass die zweite Frequenz (f₄) ein ganzzahliges Vielfaches der ersten Frequenz (f₁) ist.

3. Verfahren nach Anspruch 1 oder 2,
**dadurch gekennzeichnet, dass** im zweiten Betriebszustand das Verhältnis von erster Frequenz (f₁) zu zweiter Frequenz (f₂, f₃, f₄) nicht konstant ist.

4. Verfahren nach einem der Ansprüche 1 bis 3,
**dadurch gekennzeichnet, dass** die erste Frequenz (f₁) und die zweite Frequenz (f₂, f₃, f₄) im ersten Betriebszustand von der Drehzahl (n) des Verbrennungsmotors (4) abhängig sind.

5. Verfahren nach einem der Ansprüche 1 bis 4,
**dadurch gekennzeichnet, dass** im ersten Betriebszustand die Zeitspanne (57), während der das zweite Ventil (39) zur Zufuhr von Kraftstoff von der Steuereinrichtung (28) geöffnet wird, mindestens teilweise in einer Zeitspanne (56) liegt, während der das erste Ventil (24) geöffnet ist.

6. Verfahren nach einem der Ansprüche 1 bis 5,
**dadurch gekennzeichnet, dass** mindestens ein Kraftstoffkanal (45, 49, 50) in den Ansaugkanal (17) mündet, und dass das zweite Ventil (39) die über den mindestens einen Kraftstoffkanal (45, 49, 50) in den Ansaugkanal (17) zugeführte Kraftstoffmenge steuert.

7. Verfahren nach einem der Ansprüche 1 bis 6,
**dadurch gekennzeichnet, dass** das zweite Ventil (39) genau zwei Schaltzustände, nämlich einen vollständig geöffneten und einen vollständig geschlossenen Schaltzustand besitzt.

8. Verfahren nach einem der Ansprüche 1 bis 7,
**dadurch gekennzeichnet, dass** das zweite Ventil (39) ein elektromagnetisches Ventil ist.

9. Verfahren nach einem der Ansprüche 1 bis 8,
**dadurch gekennzeichnet, dass** der erste Betriebszustand den Startbetrieb umfasst.

10. Verfahren nach einem der Ansprüche 1 bis 9,
**dadurch gekennzeichnet, dass** der erste Betriebszustand den Leerlaufbetrieb umfasst.

11. Verfahren nach einem der Ansprüche 1 bis 10,
**dadurch gekennzeichnet, dass** der zweite Betriebszustand den Volllastbetrieb umfasst.

12. Verfahren nach einem der Ansprüche 1 bis 11,
**dadurch gekennzeichnet, dass** die zugeführte Kraftstoffmenge zur Begrenzung der Drehzahl (n) des Verbrennungsmotors (4) in einem oberen Drehzahlbereich (55) erhöht oder reduziert wird.

13. Verfahren nach Anspruch 12,
**dadurch gekennzeichnet, dass** das zweite Ventil (39) in dem oberen Drehzahlbereich (55) nur dann geöffnet wird, wenn auch das erste Ventil (24) geöffnet ist.

## Claims

1. Method for operating an internal combustion engine, wherein the internal combustion engine (4) has an intake duct (17) which opens via a first valve (24) into a crankcase (13) of the internal combustion engine (4), wherein the first valve (24) opens with a first frequency (f1), and wherein the internal combustion engine (4) has a second valve (39) which controls the amount of fuel supplied to the intake duct (17), wherein the amount of fuel supplied is controlled by controlling a period of time (57, 58), during which the second valve (39) is open in each engine cycle (x), wherein a control device (28) is provided to control the amount of fuel supplied,
**characterized in that** the first valve (24) is formed by a piston skirt (20) of a piston (19) which is mounted reciprocally in a cylinder (12) of the internal combustion engine (4) and which interacts with an inlet opening (16) of the intake duct (17) into the crankcase (13), **in that**, in a first operating state, the second valve (39) is opened with a second frequency (f2, f3, f4), which is matched to the first frequency (f1), and **in that**, in a second operating state, the second valve (39) is opened independently of the first frequency (f1), wherein the first operating state comprises a first speed range (53), and wherein the second operating state comprises a second speed range (54), wherein the speed ranges do not overlap and speeds (n) of the first speed range (53) are lower than the speeds (n) of the second speed range (54).

2. Method according to Claim 1,
**characterized in that**, in the first operating state, the first frequency (f1) is the same as the second frequency (f3), **in that** the first frequency (f1) is an integer multiple of the second frequency (f2), or **in that** the second frequency (f4) is an integer multiple of the first frequency (f1).

3. Method according to Claim 1 or 2,
**characterized in that**, in the second operating state, the ratio of the first frequency (f1) to the second frequency (f2, f3, f4) is not constant.

4. Method according to one of Claims 1 to 3,
**characterized in that** the first frequency (f1) and the second frequency (f2, f3, f4) in the first operating state are dependent on the speed (n) of the internal combustion engine (4).

5. Method according to one of Claims 1 to 4,
**characterized in that**, in the first operating state, the period of time (57), during which the second valve (39) is opened by the control device (28) for supplying fuel, lies at least partially in a period of time (56), during which the first valve (24) is open.

6. Method according to one of Claims 1 to 5,
**characterized in that** at least one fuel duct (45, 49, 50) opens into the intake duct (17), and **in that** the second valve (39) controls the amount of fuel supplied to the intake duct (17) via the at least one fuel duct (45, 49, 50).

7. Method according to one of Claims 1 to 6,
**characterized in that** the second valve (39) has exactly two switching states, namely a fully open and a fully closed switching state.

8. Method according to one of Claims 1 to 7,
**characterized in that** the second valve (39) is an electromagnetic valve.

9. Method according to one of Claims 1 to 8,
**characterized in that** the first operating state includes the start-up mode.

10. Method according to one of Claims 1 to 9,
**characterized in that** the first operating state includes the idling mode.

11. Method according to one of Claims 1 to 10,
**characterized in that** the second operating state includes the full load mode.

12. Method according to one of Claims 1 to 11,
**characterized in that** the amount of fuel supplied is increased or reduced to limit the speed (n) of the internal combustion engine (4) in an upper speed range (55).

13. Method according to Claim 12,
**characterized in that** the second valve (39) is only opened in the upper speed range (55) if the first valve (24) is also open.

## Revendications

1. Procédé de fonctionnement d'un moteur à combustion interne, le moteur à combustion interne (4) possédant un canal d'aspiration (17) qui débouche dans un carter moteur (13) du moteur à combustion interne (4) par l'intermédiaire d'une première soupape (24), la première soupape (24) s'ouvrant à une première fréquence (f1), et le moteur à combustion interne (4) possédant une deuxième soupape (39), qui commande la quantité de carburant amenée dans le canal d'aspiration (17), la quantité de carburant amenée étant commandée en commandant une période de temps (57, 58) pendant laquelle la deuxième soupape (39) est ouverte à chaque cycle moteur (x), un appareil de commande (28) étant prévu pour commander la quantité de carburant amenée,
**caractérisé en ce que** la première soupape (24) est formée par une enveloppe de piston (20) d'un piston (19) monté en va-et-vient dans un cylindre (12) du moteur à combustion interne (4), qui coopère avec une ouverture d'admission (16) du canal d'aspiration (17) dans le carter moteur (13), **en ce que**, dans un premier état de fonctionnement, la deuxième soupape (39) est ouverte à une deuxième fréquence (f2, f3, f4) qui est accordée à la première fréquence (f1), et **en ce que**, dans un deuxième état de fonctionnement, la deuxième soupape (39) est ouverte indépendamment de la première fréquence (f1), le premier état de fonctionnement comprenant une première plage de vitesses de rotation (53), et le deuxième état de fonctionnement comprenant une deuxième plage de vitesses de rotation (54), les plages de vitesses de rotation ne se chevauchant pas et les vitesses de rotation (n) de la première plage de vitesses de rotation (53) étant inférieures aux vitesses de rotation (n) de la deuxième plage de vitesses de rotation (54).

2. Procédé selon la revendication 1,
**caractérisé en ce que**, dans le premier état de fonctionnement, la première fréquence (f1) est aussi grande que la deuxième fréquence (f3), **en ce que** la première fréquence (f1) est un multiple entier de la deuxième fréquence (f2) ou **en ce que** la deuxième fréquence (f4) est un multiple entier de la première fréquence (f1).

3. Procédé selon la revendication 1 ou 2,
**caractérisé en ce que**, dans le deuxième état de fonctionnement, le rapport de la première fréquence (f1) à la deuxième fréquence (f2, f3, f4) n'est pas constant.

4. Procédé selon l'une quelconque des revendications 1 à 3,
**caractérisé en ce que** la première fréquence (f1) et la deuxième fréquence (f2, f3, f4) dans le premier état de fonctionnement dépendent de la vitesse de rotation (n) du moteur à combustion interne (4).

5. Procédé selon l'une quelconque des revendications 1 à 4,
**caractérisé en ce que**, dans le premier état de fonctionnement, la période de temps (57) pendant laquelle la deuxième soupape (39) est ouverte par l'appareil de commande (28) pour amener du carburant est au moins partiellement comprise dans une période de temps (56) pendant laquelle la première soupape (24) est ouverte.

6. Procédé selon l'une quelconque des revendications 1 à 5,
**caractérisé en ce qu'**au moins un canal de carburant (45, 49, 50) débouche dans le canal d'aspiration (17), et **en ce que** la deuxième soupape (39) commande la quantité de carburant amenée dans le canal d'aspiration (17) par l'intermédiaire de l'au moins un canal de carburant (45, 49, 50).

7. Procédé selon l'une quelconque des revendications 1 à 6,
**caractérisé en ce que** la deuxième soupape (39) possède exactement deux états de commutation, à savoir un état de commutation complètement ouvert et un état de commutation complètement fermé.

8. Procédé selon l'une quelconque des revendications 1 à 7,
**caractérisé en ce que** la deuxième soupape (39) est une soupape électromagnétique.

9. Procédé selon l'une quelconque des revendications 1 à 8,
**caractérisé en ce que** le premier état de fonctionnement comprend le fonctionnement de démarrage.

10. Procédé selon l'une quelconque des revendications 1 à 9,
**caractérisé en ce que** le premier état de fonctionnement comprend le fonctionnement de marche à vide.

11. Procédé selon l'une quelconque des revendications 1 à 10,
**caractérisé en ce que** le deuxième état de fonctionnement comprend le fonctionnement à pleine charge.

12. Procédé selon l'une quelconque des revendications 1 à 11,
**caractérisé en ce que** la quantité de carburant amenée est augmentée ou réduite pour limiter la vitesse de rotation (n) du moteur à combustion interne (4) dans une plage de vitesses de rotation supérieure (55).

13. Procédé selon la revendication 12,
**caractérisé en ce que** la deuxième soupape (39) est ouverte dans la plage de vitesses de rotation supérieure (55) uniquement lorsque la première soupape (24) est également ouverte.
